# DEMANDE DE BREVET EUROPEEN

(11) **EP 0 637 492 A1**
(43) Date de publication de la demande: **08.02.1995**
(21) Numéro de dépôt: 94401620.3
(22) Date de dépôt: 12.07.1994
(51) Int. Cl.: B29C 44/12, B29C 44/56

(54) **Planche de bord de véhicule automobile et procédé de fabrication**

(30) Priorité: 30.07.1993 FR 9309450
(71) Demandeur: ECIA - EQUIPEMENTS ET COMPOSANTS POUR L'INDUSTRIE AUTOMOBILE, F-25400 Audincourt (FR)
(72) Inventeur: Vuillemin, Guy, F-25110 Baume les Dames (FR)
(74) Mandataire: Habasque, Etienne Joel Jean-François

(57) **Abrégé**

Ce procédé de fabrication d'une planche de bord comportant une armature de support (1) sur laquelle est disposé un revêtement comprenant une peau d'aspect (5) et une couche (6) de mousse de rembourrage, la planche comportant au moins un orifice (13) de réception d'un élément d'équipement du véhicule, est caractérisé en ce qu'il comporte les étapes suivantes :
- on réalise, par injection de matière plastique dans un moule, une armature étanche (1) comportant au moins une portion frangible (2) reliée au reste de celle-ci par des zones de rupture (3,4);
- on dispose cette armature (1) dans un moule de moussage pour former le revêtement (5,6);
- on découpe le revêtement (5,6) au niveau des zones de rupture (3,4); et
- on exerce une pression sur la portion frangible (2) de l'armature (1) pour provoquer la cassure des zones de rupture (3,4) et dégager l'orifice correspondant.

## Description

La présente invention concerne un procédé de fabrication d'une planche de bord notamment de véhicule automobile et une planche de bord obtenue selon ce procédé.

On connaît déjà dans l'état de la technique un certain nombre de procédés de fabrication de ce type d'organes.

La fabrication d'une planche de bord de véhicule automobile est une opération relativement complexe dans la mesure où ces planches de bord comportent de manière générale une armature de support en matière plastique injectée, sur laquelle est disposé un revêtement comportant une peau d'aspect et une couche de mousse de rembourrage injectée entre la peau et l'armature.

De plus, ces planches de bord comportent plusieurs orifices de réception d'éléments d'équipement du véhicule.

De manière générale, l'armature est réalisée par injection de matière plastique dans un moule avec les orifices de réception des éléments d'équipement.

Cependant, pour éviter le passage de la mousse dans ces orifices lors de la fabrication du revêtement, il est nécessaire de disposer sur cette armature une feuille d'obturation de ceux-ci.

On conçoit que l'utilisation de cette feuille présente un certain nombre d'inconvénients notamment au niveau de la complexité du procédé de fabrication et de son coût.

Par ailleurs, ces procédés connus présentent également des inconvénients de découpe en particulier de cette feuille d'obturation et du revêtement pour dégager le ou les orifices correspondants de la planche de bord.

Le but de l'invention est donc de résoudre ces problèmes en proposant un procédé de fabrication qui soit simple et qui permette de réduire les coûts de fabrication des planches de bord.

A cet effet, l'invention a pour objet un procédé de fabrication d'une planche de bord de véhicule automobile, du type comportant une armature de support sur laquelle est disposé un revêtement comprenant une peau d'aspect et une couche de mousse de rembourrage injectée entre ladite peau et ladite armature, la planche de bord comportant au moins un orifice de réception d'un élément d'équipement du véhicule, caractérisé en ce qu'il comporte les étapes suivantes :
- on réalise, par injection de matière plastique dans un moule, une armature étanche comportant au moins une portion frangible reliée au reste de celle-ci par des zones de rupture;
- on dispose cette armature dans un moule de moussage pour former le revêtement;
- on découpe le revêtement au niveau des zones de rupture; et
- on exerce une pression sur la portion frangible de l'armature pour provoquer la cassure des zones de rupture et dégager l'orifice correspondant.

Selon un autre aspect, l'invention a également pour objet une planche de bord obtenue selon ce procédé.

L'invention sera mieux comprise à l'aide de la description qui va suivre, donnée uniquement à titre d'exemple et faite en se référant aux dessins annexés, sur lesquels :

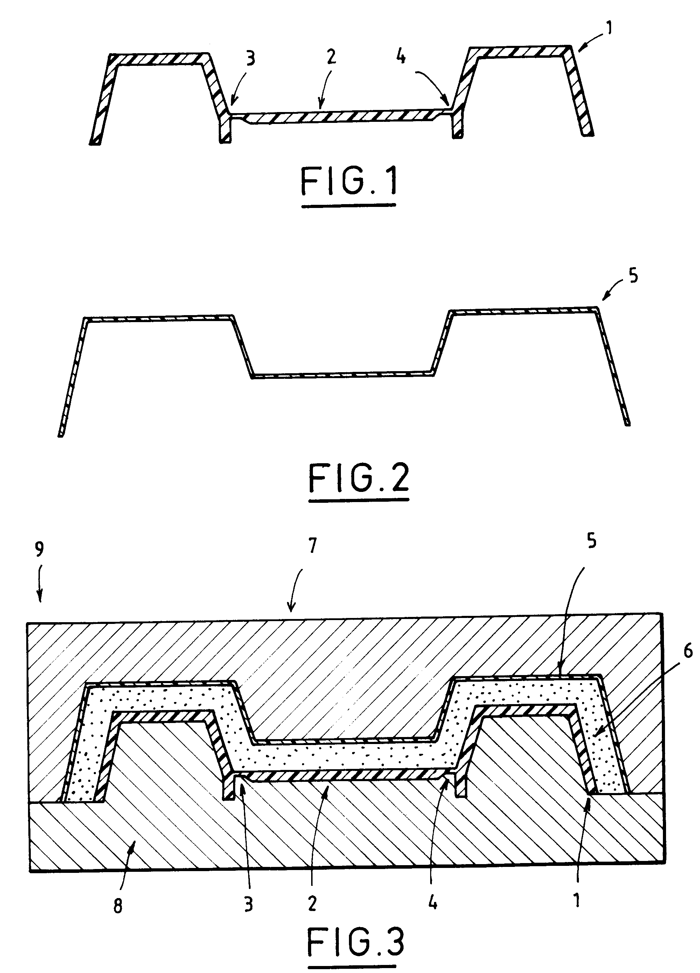

- les Fig.1 à 5 illustrent les différentes étapes d'un procédé de fabrication d'une planche de bord selon l'invention.

Le procédé selon l'invention permet de fabriquer une planche de bord de véhicule automobile qui comporte une armature de support sur laquelle est disposé un revêtement comprenant une peau d'aspect et une couche de mousse de rembourrage injectée entre cette peau et cette armature.

Ces planches de bord comportent généralement un ou plusieurs orifices de réception d'éléments d'équipement du véhicule.

La première étape de procédé de fabrication selon l'invention consiste à réaliser l'armature de la planche de bord.

Cette armature désignée de façon générale par la référence 1 sur la figure 1 est obtenue par injection de matière plastique dans un moule d'injection et se présente sous la forme d'une armature étanche comportant au moins une portion frangible désignée par la référence générale 2 reliée au reste de cette armature par des zones de rupture désignées de façon générale par les références 3 et 4.

Bien entendu, la configuration de cette armature est adaptée à la forme de la planche de bord qu'il y a lieu de fabriquer.

Les zones de rupture sont avantageusement constituées par des zones de section réduite de matériau plastique de liaison de la portion frangible 2 au reste de l'armature 1. Ces zones de section réduite sont obtenues par des configurations appropriées du moule d'injection.

L'étape suivante du procédé de fabrication selon l'invention consiste à réaliser par exemple par roto-moulage de matière plastique une peau d'aspect désignée par exemple par la référence 5 sur la Fig.2.

Cette peau présente par exemple une forme complémentaire à celle de l'armature.

Sur la Fig.3, on peut constater qu'une mousse de rembourrage désignée par la référence générale 6 est injectée entre la peau 5 et l'armature 1, disposées respectivement sur deux parties complémentaires 7 et 8 d'un moule de moussage désigné par la référence générale 9.

Ce procédé d'injection de mousse de rembourrage entre une peau de revêtement et une armature de support de planche de bord est bien connu dans l'état de la technique et ne sera pas décrit plus en détail par la suite.

On notera cependant en regard de cette figure 3 que le revêtement, c'est à dire la peau d'aspect et la mousse de rembourrage, recouvre également la portion frangible 2 et les zones de rupture 3 et 4 de liaison de cette portion frangible 2 au reste de l'armature 1.

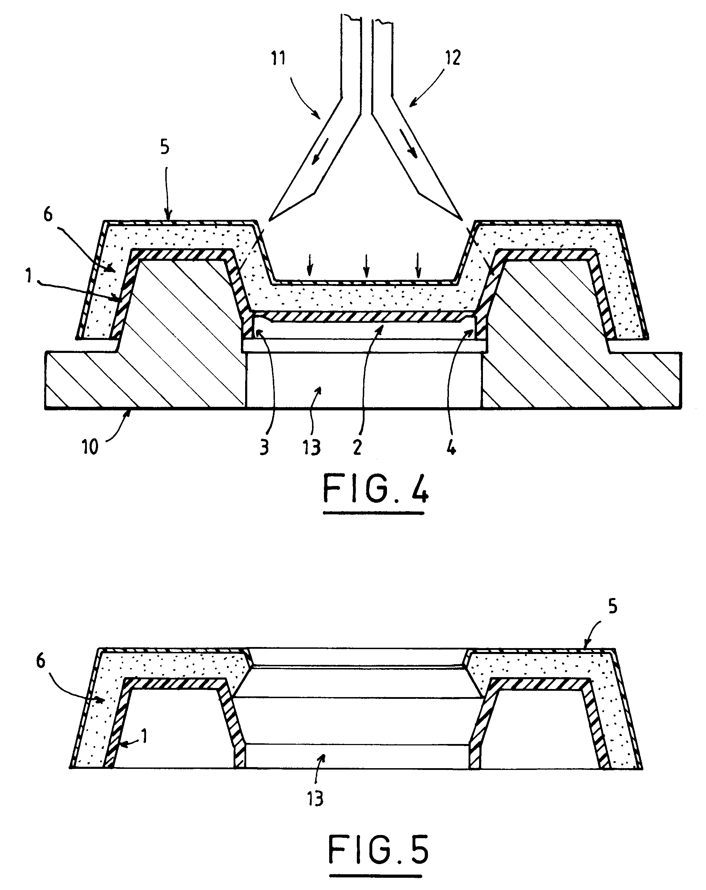

Une fois le revêtement déposé sur l'armature, cet ensemble est retiré du moule de moussage et est disposé sur une structure de découpe 10 (Fig.4), pour permettre une découpe du revêtement au niveau des zones de rupture 3 et 4.

Cette découpe du revêtement est en fait une découpe de la peau d'aspect 5 et de la couche de mousse de rembourrage 6 à l'aide par exemple d'outils de coupe désignés par les références 11 et 12 sur la figure 4.

Ces outils de coupe sont constitués par tous organes appropriés, tels que par exemple des lames d'un outil de découpe ou encore des moyens de découpe à jet d'eau.

Bien entendu, la découpe du revêtement peut être réalisée à n'importe quel endroit à proximité des zones de rupture.

On conçoit alors qu'il suffit d'exercer une pression sur la portion frangible 2 de l'armature pour provoquer la cassure des zones de rupture 3 et 4 et permettre le dégagement de l'orifice correspondant 13 de la planche de bord comme cela est illustré sur les figures 4 et 5.

Le procédé de fabrication selon l'invention permet d'obtenir très facilement des planches de bord à orifices de réception d'éléments d'équipement d'un véhicule et ceci pour un coût réduit par rapport aux procédés de l'état de la technique.

En effet, ce procédé de fabrication est extrêmement simple par rapport aux procédés de l'état de la technique dans la mesure où il permet de supprimer la couche de matériau d'étanchéité interposée entre l'armature de support et la couche de mousse de rembourrage avant injection de celle-ci dans le moule de moussage.

Par ailleurs, cette suppression permet également de réduire le temps de fabrication de la planche de bord et d'obtenir une meilleure qualité de finition de celle-ci.

Le procédé selon l'invention est applicable quelle que soit la configuration de la planche de bord et permet de réaliser des orifices qui auraient été extrêmement difficiles voir impossibles à obtenir par les procédés de fabrication connus dans l'état de la technique.

On notera également que ce procédé de fabrication peut être utilisé en association avec des procédés de découpe d'orifice connus dans l'état de la technique.

## Revendications

1. Procédé de fabrication d'une planche de bord de véhicule automobile, du type comportant une armature de support (1) sur laquelle est disposé un revêtement comprenant une peau d'aspect (5) et une couche (6) de mousse de rembourrage injectée entre ladite peau et ladite armature, la planche de bord comportant au moins un orifice de réception d'un élément d'équipement du véhicule, caractérisé en ce qu'il comporte les étapes suivantes :
- on réalise, par injection de matière plastique dans un moule, une armature étanche (1) comportant au moins une portion frangible (2) reliée au reste de celle-ci par des zones de rupture (3,4);
- on dispose cette armature (1) dans un moule (7,8,9) de moussage pour former le revêtement (5,6);
- on découpe le revêtement (5,6) au niveau des zones de rupture (3,4); et
- on exerce une pression sur la portion frangible (2) de l'armature (1) pour provoquer la cassure des zones de rupture (3,4) et dégager l'orifice correspondant (13) de la planche de bord.

2. Planche de bord de véhicule automobile, du type comportant une armature de support (1) sur laquelle est disposé un revêtement comprenant une peau d'aspect (5) et une couche de mousse de rembourrage (6) injectée entre ladite peau et ladite armature, la planche de bord comportant au moins un orifice (13) de réception d'un élément d'équipement du véhicule, caractérisée en ce qu'elle est obtenue selon le procédé de la revendication 1.
